**Europäisches Patentamt**

**European Patent Office**

**Office européen des brevets**

(19)

(11) Veröffentlichungsnummer: **0 110 221**
**B1**

(12) # EUROPÄISCHE PATENTSCHRIFT

(45) Veröffentlichungstag der Patentschrift:
**08.04.87**

(51) Int. Cl.⁴: **B 32 B 27/36**

(21) Anmeldenummer: **83111319.6**

(22) Anmeldetag: **12.11.83**

(54) Polycarbonat-Kunststofftafel.

(30) Priorität: **25.11.82 DE 8233007 U**

(43) Veröffentlichungstag der Anmeldung:
**13.06.84 Patentblatt 84/24**

(45) Bekanntmachung des Hinweises auf die Patenterteilung:
**08.04.87 Patentblatt 87/15**

(84) Benannte Vertragsstaaten:
**AT DE FR GB IT NL SE**

(56) Entgegenhaltungen:
**EP-A-0 054 856**
**DE-A-1 112 626**
**DE-A-1 694 273**
**DE-A-2 832 676**
**GB-A-992 930**

(73) Patentinhaber: **Röhm GmbH, Kirschenallee**
**Postfach 4242, D-6100 Darmstadt 1 (DE)**

(72) Erfinder: **Vetter, Heinz, Dr., Taunusstrasse 92,**
**D-6101 Rossdorf 1 (DE)**

## Beschreibung

Die Erfindung betrifft eine Kunststofftafel, bestehend aus einer Kernschicht aus Polycarbonatkunststoff und, wenigstens auf einer Seite der Kernschicht, aus einer koextrudierten Deckschicht aus Kunststoff, die wenigstens 3 Gew.-% eines UV-Absorbers enthält.

Polycarbonatkunststoffe haben nur eine begrenzte Wetterfestigkeit. Vor allem durch UV-Strahlung werden sie geschädigt. In den Kunststoff eingebrachte UV-Absorber vermögen das Innere einer Kunststofftafel aus Polycarbonat zu schützen, jedoch nicht die Oberfläche. Zu deren Schutz wird nach DE-A- 1 694 273 eine Lackschicht aufgebracht, die aus 3 Teilen eines UV-Absorbers und 5 Teilen Polymethylmethacrylat oder Polycarbonat bestehen kann.

Gemäß DE-A- 28 32 675 wird eine Polymethylmethacrylatschicht mit einem Gehalt an einem UV-Absorber bei der Herstellung einer Polycarbonat-Kunststofftafel durch Koextrusion aufgebracht.

In beiden Fällen werden bevorzugt Polymethacrylatkunststoffe für die Deckschicht verwendet, weil sie hoch witterungsbeständig sind und ihre Oberfläche weniger als die von Polycarbonaten durch UV-Strahlung geschädigt wird. Ein Nachteil der Deckschicht aus Polymethacrylat ist ihre - im Vergleich zu Polycarbonaten - geringere Zähigkeit. Wird die Polycarbonat-Kunststofftafel unter Spannung, beispielsweise im gebogenen Zustand, verlegt, so treten in der konvexen Oberfläche Zugspannungen auf, die zu Rißbildung in der Deckschicht führen können. Dem bloßen Auge erscheint die zunehmende Rißbildung als allmähliches Mattwerden der anfänglich glänzenden Oberfläche. Darüber hinaus haben die Risse die Neigung, in die Polycarbonat-Kernschicht weiterzulaufen, so daß die beschichtete Tafel nicht die hohe Bruchfestigkeit des Polycarbonatkunststoffes beibehält. Vor allem nimmt die Bruchempfindlichkeit gegen Hagelschlag zu. Diese Nachteile machen sich bei Hohlprofilplatten noch stärker bemerkbar, denn dort treten bei gebogener Verlegung besonders hohe Dehnungen auf der konvexen Seite auf.

## Aufgabe und Lösung

Ziel der Erfindung war es, die durch die Polymethylmethacrylatschicht verursachte Minderung der Bruchfestigkeit zu vermeiden, ohne auf den Schutz durch den darin enthaltenen UV-Absorber zu verzichten.

Es wurde überraschend gefunden, daß die geschilderten Nachteile vermieden werden, aber die Schutzwirkung der Deckschicht voll erhalten bleibt, wenn diese aus koextrudiertem Polycarbonatkunststoff besteht. Durch die Verwendung des gleichartigen Werkstoffes für die Kernschicht und die Deckschicht haben beide Schichten die gleiche Dehnbarkeit, so daß auch unter Spannung keine vermehrte Rißbildung in der Deckschicht auftritt. Überraschend ist, daß an der Oberfläche der Deckschicht keine rasche Verwitterung auftritt, wenn die Deckschicht wenigstens 3, vorzugsweise wenigstens 5 Gew.-% eines UV-Absorbers enthält, obwohl an der Oberfläche der Deckschicht das Polycarbonat der UV-Strahlung voll ausgesetzt ist. Die Absorption der UV-Strahlung kann erst im Innern der Deckschicht eintreten. Die beobachteten Vorteile treten nur bei einer durch Koextrusion mit der Kernschicht erzeugten Deckschicht auf.

## Ausführung der Erfindung

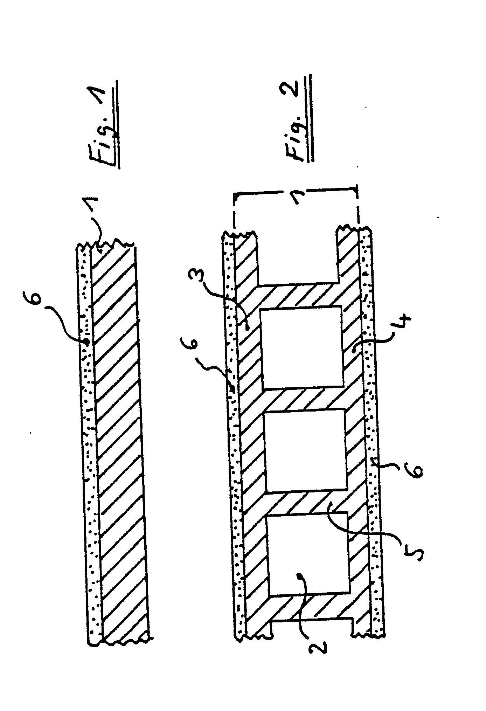

Die einfachste Ausführungsform ist in Figur 1 in einem ausschnittsweisen Querschnitt einer einseitig beschichteten Volltafel dargestellt. Figur 2 zeigt in gleicher Darstellungsweise als bevorzugte Ausführungsform eine extrudierte Hohlkammerplatte mit beidseitiger Beschichtung.

## Die Kernschicht (1)

einer Volltafel kann eine Dicke von z.B. 2 bis 10 mm, vorzugsweise 3 bis 8 mm haben. In der Regel sind die Außenseiten der Kernschicht parallel zueinander und eben, jedoch können sie auch gewellt oder - namentlich im eingebauten Zustand - einachsig gebogen sein. Die Kernschicht kann auch kuppelförmig gewölbt oder in anderer Weise dreidimensional verformt sein.

Die Kernschicht (1) kann auch eine oder mehrere Hohlkammern (2) enthalten, die sich vorzugsweise parallel zueinander geradlinig durch die Kernschicht erstrecken. Vorzugsweise handelt es sich um Stegdoppel- oder Dreifachplatten, in denen die Kernschicht (1) aus zwei ebenen, parallelen Wänden (3, 4) besteht, die durch Stege (5) einstückig miteinander verbunden sind. Die Hohlkammern (2) können gegebenenfalls durch eine oder mehrere weitere Zwischenwände unterteilt sein. Die Wände (3, 4) und Stege (5) haben gewöhnlich Wandstärken von 0,3 bis 2 mm. Die Kernschicht einschließlich der Hohlkammern ist beispielsweise 5 bis 50, vorzugsweise 6 bis 10 mm dick.

Die Flächenausdehnung und -gestalt der Kernschicht richtet sich nach den Anforderungen der vorgesehenen Verwendung und ist im Rahmen der technischen Herstellungsbedingungen weitgehend beliebig. Flach liegende Tafeln haben zweckmäßig eine rechteckige Fläche und Kantenlängen von 0,5 bis 6 m. Längere Volltafeln oder -bahnen können gerollt werden.

## Die Deckschicht (6)

Die Kernschicht (1) trägt auf wenigstens einer, vorzugsweise auf beiden Seiten eine Deckschicht (6), die sich von der Kernschicht durch einen höheren Gehalt an UV-Absorbern unterscheidet. Ihre Dicke soll ausreichen, um eine senkrecht einfallende UV-Strahlung von 280 bis 380 nm zu mehr als 90 %, bevorzugt mehr als 99 % (bezogen auf den nicht reflektierten Anteil) zu absorbieren. Dafür reicht eine Dicke von 5 bis 50 µm aus, jedoch können Schichtdicken bis 100 µm aufgebracht sein.

Die Deckschicht enthält wenigstens 3 Gew.-% und vorzugsweise 5 bis 15 Gew.-% eines üblichen UV-Absorbers für Kunststoffe. Der bevorzugte Gehalt an UV-Absorbern liegt zwischen 0,4 und 2,5 g/m² kann aber gegebenenfalls bis 5 g/m² gesteigert werden. Die Konzentration wird daher um so höher gewählt, je dünner die Deckschicht ist, damit die erforderliche Absorption innerhalb der Deckschicht eintritt. Unterhalb 0,4 g/m² ist der Schutz der Oberfläche der Deckschicht gegen Verwitterung nicht mehr gewährleistet. Der Schutz ist um so wirksamer, je höher die insgesamt je Quadratmeter eingesetzte Absorbermenge liegt. Geeignete UV-Absorber sind 2-Hydroxy-4-n-octoxybenzophenon, 2-Hydroxy-4-methoxybenzophenon, 2-(2'-Hydroxy-5'-methylphenyl)-benztriazol und andere Abkömmlinge des 2-Hydroxy-benzophenons oder Benzotriazols, ferner 2,4-Dihydroxy-benzoylfuran, Salicylsäurephenylester, Resorcindisalicylat, Resorcinmono- und di-benzoat, Benzylbenzoat, Stilben, β-Methylumbelliferon und dessen Benzoat. Zahlreiche weitere UV-Absorber sind bekannt und im Randel erhältlich. Besonders bevorzugt sind UV-Absorber von geringer Flüchtigkeit bei der Verarbeitungstemperatur, d.h. besonders solche mit möglichst hohem Molekulargewicht. Der UV-Absorber soll in der gewählten Konzentration mit dem Kunststoffmaterial möglichst homogen mischbar sein. Die Kernschicht kann völlig frei von UV-Absorbern sein oder enthält diese in deutlich geringerer Konzentration als die Deckschicht. Eine Konzentration von 0,5 Gew.-% wird nicht überschritten.

Der Polycarbonatkunststoff leitet sich in der Regel von einem aromatischen Bisphenol oder einem Gemisch solcher Bisphenole ab, insbesondere Bisphenol A. Alle Polycarbonatkunststoffe, die sich zu Tafeln von hoher Zähigkeit und Lichtdurchlässigkeit verarbeiten lassen, sind als Werkstoff sowohl für die Kernschicht als auch für die Deckschicht geeignet.

Diese Schichten bestehen vorzugsweise, aber nicht zwangsläufig aus dem gleichen extrudierbaren Kunststoffmaterial, abgesehen von der Konzentration des UV-Absorbers. Sie können glasklar und farblos oder in üblicher Weise gefärbt, getrübt oder pigmentiert sein, jedoch hat die Erfindung für hoch lichtdurchlässige Massen die größte Bedeutung.

Die Deckschicht wird gleichzeitig mit der Kernschicht durch Koextrusion erzeugt.

Man verwendet dafür an sich bekannten Mehrstoff-Schlitzdüsen, in die mit zwei Extrudern die platsifizierten Massen für die Kern- und Dickschicht eingepreßt werden. Die Extrusion erfolgt bei Temperturen zwischen 240 und 300° C.

## Anwendung

Die erfindungsgemäßen Tafeln eignen sich als Verglasungs- und Bauelemente, vor allem im Freien, wo die dem Sonnenlicht ausgesetzte Seite die Deckschicht trägt. Mit Vorteil werden sie da eingesetzt, wo Dehnungskräfte auf die Tafeln einwirken können, z.B. bei gebogener Verlegung von Volltafeln oder Stegdoppelplatten. Diese Verlegungsart wird im Gewächshausbau häufig angewendet und hat in der Vergangenheit zu schweren Hagelschäden geführt. Durch die Erfindung werden derartige Schäden vermieden.

## Beispiel

Durch Koextrusion mittels einer Mehrstoff-Schlitzdüse, die von zwei Extrudern gespeist wird, wird eine zweischichtige Polycarbonat-Tafel erzeugt. In einem Extruder wird eine extrudierbare thermoplastische Polycarbonat-Formmasse ohne UV-Absorber verarbeitet. Der zweite Extruder fördert ein Gemisch aus 90 Gew.-% der gleichen Polycarbonat-Formasse und 10 Gew.-% 2-Hydroxy-4-n-octoxybenzophenon als UV-Absorber in die Mehrstoffdüse. Der Strom dieses Gemisches bildet eine Deckschicht von 30 µm Dicke auf einer Oberfläche der Kernschicht. Diese wird aus der reinen Polycarbonatformmasse gebildet und ist 3 mm dick. Die Kunststoffschmelze wird nach dem Verlassen der Düse in einem Drei-Walzen-Glättwerk geglättet.

Im durchlaufenden Sonnenlicht wirft die beschichtete Tafel einen gleichmäßigen Schatten, der keinerlei Oberflächenstörungen erkennen läßt. Ein ähnliches Bild ergibt das von der Oberfläche der Tafel auf einen gewissen Schirm reflektierte Sonnenlicht.

Die so hergestellte Tafel wird mit einem Krümmungsradius von 0,5 mm elastisch gebogen und unter Freiluft bewittert. Nach zweijähriger Bewitterung ist die Tafel rißfrei. Zum Vergleich wird eine extrudierte, mittels Glättwerk geglättete Platte anschließend an die Extrusion auf einer Oberfläche lackiert. Der Lack wird mittels zur Extrusionsrichtung gegenläufigen Lackauftragswalzen gleichmäßig aufgebracht. Die Lacklösung besteht aus 18 % Polycarbonat mit einem Molekulargewicht von ca 20.000, 2 % des oben erwähnten UV-Absorbers und 80 % Dichloräthan. Das Lösungsmittel wird anschließend in einem Trockenofen bei graduell ansteigenden Temperaturen bis 100° C ausgetrieben. Die endgültige Lackschichtdicke beträgt 30 µm.

Das Schattenbild der Tafel zeigt teilweise Pickel, orangenschalenähnliche Oberflächenstrukturen und optische Störungen infolge unvollständigem Verlauf und Einschlüssen von Staubpartikeln.

Bei der Bewitterung der elastisch gebogenen Tafel in der oben beschriebenen Weise sind bereits nach 1 Jahr einige, nach 2 Jahren zahlreiche Risse erkennbar. Die Rißbildung ist als Folge der im Polycarbonat verbliebenen Lösungsmittelreste und des niederen Molekulargewichts anzusehen. Das niedere Molekulargewicht ist erforderlich um eine hohe Lackkonzentration zu erreichen, wodurch zusätzliche Oberflächenstörungen infolge von Hautbildung beim Abdampfen des Lösungsmittels und Verlaufsstörungen vermieden werden.

## Patentansprüche

1. Kunststofftafel, bestehend aus einer Kernschicht aus Polycarbonatkunststoff, die nicht mehr als 0,5 Gew.-% eines UV-Absorbers enthält, und auf wenigstens einer Seite der Kernschicht aus einer mit der Kernschicht koextrudierten Deckschicht aus Kunststoff, die wenigstens 3 Gew.-% eines UV-Absorbers enthält,
dadurch gekennzeichnet,
daß die Deckschicht aus Polycarbonatkunststoff besteht.

2. Kunststofftafel nach Anspruch 1, gekennzeichnet durch eine Dicke der Deckschicht von 5 - 50 µm.

3. Kunststofftafel nach den Ansprüchen 1 oder 2, dadurch gekennzeichnet, daß die Kernschicht eine Dicke von 0,3 bis 20 mm hat.

4. Kunststofftafel nach Anspruch 3, dadurch gekennzeichnet, daß die Kernschicht in Längsrichtung durchgehende Hohlräume aufweist.

5. Verfahren zur Herstellung einer Kungstofftafel gemäß den Ansprüchen 1 bis 4, durch Koextrusion einer Kernschicht aus Polycarbonatkunststoff und einer Deckschicht aus einem Kunststoff, der wenigstens 3 Gew.-% eines UV-Absorbers enthält, auf wenigstens einer Seite der Kernschicht mittels einer Kunststoff-Schlitzdüse, in die aus zwei Extrudern plastifizierte Massen zur Bildung der Kern- und Deckschichten eingepreßt werden,
dadurch gekennzeichnet,
daß als Kunststoff zur Bildung der Deckschicht ein Polycarbonatkunststoff eingesetzt wird.

## Claims

1. Plastics board, consisting of a core layer of polycarbonate plastics containing not more than 0.5% by weight of a UV absorber, and consisting, on at least one side of the core layer, of a covering layer of plastics, coextruded with the core layer, containing at least 3% by weight of a UV absorber, characterised in that the covering layer consists of polycarbonate plastics.

2. Plastics board as claimed in claim 1, characterised in that the thickness of the covering layer is from 5 to 50 microns.

3. Plastics board as claimed in claim 1 or 2, characterised in that the thickness of the core layer is from 0.3 to 20 mm.

4. Plastics board as claimed in claim 3, characterised in that the core layer has continuous cavities in the longitudinal direction.

5. Process for preparing a plastics board as claimed in claims 1 to 4, by coextrusion of a core layer of polycarbonate plastics and a covering layer of a plastics material which contains at least 3% by weight of a UV absorber, on at least one side of the core layer by means of a slotted plastics die into which plasticised masses for forming the core and covering layers are pressed from two extruders, characterised in that a polycarbonate plastics material is used as the plastics to form the covering layer.

## Revendications

1. Panneau de matière plastique, se composant d'une couche de coeur en matière synthétique de polycarbonate qui ne contient pas plus de 0,5 % en poids d'un agent absorbant l'ultraviolet et, sur l'une au moins des faces de la couche de coeur, d'une couche de recouvrement en matière synthétique qui est coextrudée avec la couche de coeur et qui contient au moins 3 % en poids d'un agent absorbant l'ultraviolet, caractérisé en ce que la couche de recouvrement est faite de matière synthetique de polycarbonate.

2. Panneau de matière plastique selon la revendication 1, caracterisé par une épaisseur de la couche de recouvrement de 5 à 50 µm.

3. Panneau de matière plastique selon la revendication 1 ou 2, caractérisé en ce que la couche de coeur a une épaisseur de 0,3 à 20 mm.

4. Panneau de matière plastique selon la revendication 3, caractérisé en ce que la couche de coeur présente des cavités qui s'étendent de bout en bout en direction longitudinale.

5. Procédé de fabrication d'un panneau de matière plastique selen l'une quelconque des revendications 1 à 4 par coextrusien d'une couche de coeur en matière synthétique de polycarbonate et, sur l'une des faces au moins de la couche de coeur, d'une couche de recouvrement en une matière synthétique qui contient au moins 3 % en poids d'un agent absorbant l'ultraviolet, au moyen d'une filière plate pour matières synthétiques dans laquelle sont introduites sous pression, pour la formation des couches de coeur et de recouvrement, des masses plastifiées provenant de deux extrudeuses, caractérisé en ce qu'on utilise, comme matière synthétique pour la formation de la couche de recouvrement, une matière synthétique de polycarbonate.

*Fig. 1*

*Fig. 2*